(19) **Europäisches Patentamt / European Patent Office / Office européen des brevets**

(11) **EP 1 674 527 B1**

(12) **EUROPEAN PATENT SPECIFICATION**

(45) Date of publication and mention
of the grant of the patent:
**23.05.2012 Bulletin 2012/21**

(21) Application number: **04792308.1**

(22) Date of filing: **13.10.2004**

(51) Int Cl.:
**C08L 67/04** (2006.01)     **C08K 5/10** (2006.01)
**C08K 9/06** (2006.01)

(86) International application number:
**PCT/JP2004/015067**

(87) International publication number:
**WO 2005/035658 (21.04.2005 Gazette 2005/16)**

(54) **FLAME-RETARDANT INJECTION-MOLDED OBJECT**

FLAMMWIDRIGER SPRITZGUSSGEGENSTAND

OBJET MOULE PAR INJECTION IGNIFUGE

(84) Designated Contracting States:
**DE FR GB IT**

(30) Priority: **14.10.2003 JP 2003353128**
**15.10.2003 JP 2003355568**

(43) Date of publication of application:
**28.06.2006 Bulletin 2006/26**

(60) Divisional application:
**09154959.2 / 2 172 520**

(73) Proprietors:
• **MITSUBISHI PLASTICS, INC.**
**Chiyoda-ku,**
**Tokyo 100-0005 (JP)**
• **Sony Corporation**
**Tokyo 141-0001 (JP)**

(72) Inventors:
• **TANAKA, Kazuya,**
**Mitsubishi Plastics, Inc.**
**Nagahama-shi, Shiga 526-8660 (JP)**
• **TAKAGI, Jun,**
**Mitsubishi Plastics, Inc.**
**Nagahama-shi, Shiga 526-8660 (JP)**

• **KATO, Yukio,**
**Mitsubishi Plastics, Inc.**
**Kanagawa 254-8614 (JP)**
• **YAMADA, Shinichiro c/o Sony Corporation**
**Tokyo 141-0001 (JP)**
• **MORI, Hiroyuki c/o Sony corporation**
**tokyo 141-0001 (JP)**
• **FUJIHIRA, Yuko c/o Sony Corporation**
**Tokyo 141-0001 (JP)**

(74) Representative: **Gille Hrabal**
**Patentanwälte**
**Brucknerstrasse 20**
**40593 Düsseldorf (DE)**

(56) References cited:
**EP-A- 1 544 250      EP-A- 1 609 820**
**JP-A- 2002 105 298**

• **DATABASE WPI Week 200254 Derwent Publications Ltd., London, GB; AN 2002-503545 XP002463722 & JP 2002 105298 A (SHIMADZU CORP) 10 April 2002 (2002-04-10)**

Remarks:
The file contains technical information submitted after the application was filed and not included in this specification

**Description**

TECHNICAL FIELD

The present invention relates to an injection molded article comprising a lactic acid resin as the main component, and specifically, to an injection molded article having flame-retatdant properties.

BACKGROUND ART

Plastic has infiltrated many areas of life and industry, the world wide production thereof having reached approximately one hundred million tons annually. However, the majority thereof is discarded after use, and this has been identified as one cause that disturbs the global environment. Therefore, effective use of depletable resources has become regarded as important in recent years, and utilization of renewable resources has become an important topic.

Currently, utilization of plastics from plant source materials (biodegradable) is drawing attention as one resolution means thereof. Plastics from plant source materials not only allow non-depletable resources to be used and depletable resources to be saved during plastic manufacturing, it also has excellent recyclability. Among these, lactic acid resins are materials that are of particular interest as materials of substitution for polystyrene and polyethylene terephthalate in the field of injection molding, such as home appliances, office equipment, and automotive parts, since they can be mass produced through chemical engineering with lactic acid resin obtained from fermentation of the starch as the source materials; furthermore, they exhibit excellent transparency, rigidity, and heat resistance.

Applications for home appliances, office equipment, automotive parts, and the like require a flame retardant for fire prevention, and since lactic acid resins are resins that are as easily combustible as polystyrene, ABS, and the like, it is necessary to enforce flame retarding measures, such as combining a flame retardant, when using in these applications.

Conventionally, flame retarding measures combining halogen flame retardants, in particular, bromine flame retardants, were often adopted for polystyrene, ABS, and the like; however, when halogen flame retardants are combined, there is the risk that toxic gases, such as dioxins, will be generated at combustion time, posing problems from the perspective of safety during waste incineration and thermal recycling.

From such points of view, "metal hydroxides" are drawing attention as a flame retardant that is environment friendly and does not generate decomposition gas.

For instance, a method is disclosed in Japanese Patent Application Laid-Open No. H8-252823 and the like, wherein flame-retardant properties are provided by combining 30% to 50 wt% aluminum hydroxide or magnesium hydroxide with a pellet comprising biodegradable plastic source materials.

However, it has become clear that if a metal hydroxide is combined as a flame retardant with a biodegradable plastic, the metal hydroxide becomes a starting point for breakage, lowering the impact resistance.

Japanese Patent Application Laid-Open No. 2003-192925 and Japanese Patent Application Laid-Open No. 2003-192929 disclose a technique whereby flame-retardant properties are provided by combining a flame retardant additive agent to a biodegradable macromolecular organic compound. However, the impact resistance not being sufficient, the technique was insufficient for an enforceable technology.

Japanese Patent Application Laid-Open No. 2003-213149 discloses a flame retardant biodegradable resin composition comprising a biodegradable flame retardant and a biodegradable macromolecular organic compound. However, the flame-retardant property of the resin composition provided by such an invention would fulfill the HB rating according to the UL94 criteria; thus, the flame retardant property was insufficient for broad use in home appliances, automotive applications, and the like.

In addition, Japanese Patent Application Laid-Open No. 2003-192921 discloses a technique, wherein at least one species of nucleic acid-related substances selected from the group consisting of a nucleobase, a nucleoside, a nucleotide, and a polynucleotide is combined as a flame retardant. However, there is no statement on the impact resistance, and the technique was not sufficient for using materials having polylactic acid, which has poor impact resistance, as main source materials in applications such as home appliances and automobiles.

In regard to improvement of impact resistance, for instance, Japanese Patent Application Laid-Open No. H10-87976 discloses means that combine polybutylene succinate, polybutylene succinate/adipate copolymer, and the like as aliphatic polyester other than lactic acid resin; however, it has become clear that to improve impact resistance in a system that combines a metal hydroxide, these aliphatic polyesters need to be combined in large quantities, to which occurrence of softening (decrease in elasticity) and a decrease in heat resistance of the injection molded article are attributed, such that these aliphatic polyesters are not only difficult to employ in applications that require heat resistance, but also become the source of combustion, decreasing flame-retardant properties.

Otherwise, Japanese Patent Application Laid-Open No. H11-116784 proposes a method whereby impact resistance is improved by the addition of an impact-resistance-improving agent to polylactic acid and crystallization. However, a problem existed, as the impact-resistance-improving agent acted as a plasticizer, decreasing the heat resistance of the injection molded particle.

European patent application EP 1 609 820 Al discloses injection molded objects which are biodegradable and display a good flame retardance. These injection molded objects comprising a lactic acid based resin and a surface-treated metal hydroxide. The example of the document describes a molded article made from a mixture of a lactic acid resin and aluminum hydroxide surface-treated with a silane coupling agent.

European patent application EP 1 544 250 Al describes flame-retardant injection molded objects comprising a lactic acid based resin and a surface-treated metal hydroxide. The example 8 of this document describes a molded article made from a mixture of a lactic acid resin and aluminum hydroxide surface-treated with a silane coupling agent.

Japanese patent application JP A 2002-105298 describes lactic acid-based aliphatic polyester resin compositions comprising an inorganic filler and optionally an aliphatic polyester resin other than the lactic acid-based aliphatic polyester resin. In the list of the inorganic fillers contained in the document magnesium hydroxide needles, alumina fiber and plate-shaped aluminum hydroxide are mentioned, but not as a preferred embodiment and not as an option which is used in the examples.

DISCLOSURE OF THE INVENTION

Problems to Be Solved by the Invention

The present invention provides a flame retardant injection molded article that not only has flame-retardant properties, but also combines impact resistance and heat resistance. In other words, a flame retardant injection molded article whose impact resistance has been increased without softening is provided.

Means to Solve the Problems

The present invention proposes a flame retardant injection molded article formed from a resin composition comprising a lactic acid resin (A), a metal hydroxide (B) whose surface has been treated with a silane coupling agent, and a copolymer (C) of lactic acid resin and diol/carboxylic acid, the proportion in the resin occupied by the component (B) being 15% to 40% in mass, and the proportion in the resin composition occupied by the component (C) being 10% to 40% in mass, the Izod impact strength being not less than 5 kJ/m$^2$ according to JIS K 7110, and the deflection temperature under load being not less than 50°C according to JIS K 7191, and the flame-retardant rating being not less than V-2 according to UL94 vertical firing test.

JIS K 7110 and JIS K 7191 are classifications according to the Japanese Industry Standard, and as the testing conditions defined by JIS K 7110 are the same as the testing conditions defined by ASTM D256, in addition, as the testing conditions defined by JIS K 7191 are the same as the testing conditions defined by ASTM D648, they can be respectively switched to the ASTM standards for reading.

The upper limit values and the lower limit values of the numerical ranges in the present invention contain the intent that a case falling slightly outside a numerical range specified by the present invention is included within the scope of the present invention, as long as the effect of an action is the same as when within the numerical value range in question.

BEST MODE FOR CARRYING OUT THE INVENTION

Embodiments of the present invention will be described in the following; however, these are examples of the present invention, and the scope of the present invention is not limited to the embodiments described below.

(First Embodiment)

The flame retardant injection molded article related to the First Embodiment of the present invention is a flame retardant injection molded article that is formed from a resin composition comprising a lactic acid resin (A), a metal hydroxide (B) whose surface has been treated with a silane coupling agent, and a copolymer (C) of lactic acid resin and diol/dicarboxylic acid.

(Lactic acid resin (A))

For the lactic acid resin used in the present embodiment, poly(L-lactic acid) having L-lactic acid as the structural unit, poly(D-lactic acid) having D-lactic acid as the structural unit, or poly(DL-lactic acid) having L-lactic acid and D-lactic acid as the structural units, or a mixture comprising the combination of two or more species thereof can be used.

The DL constitution ratio of the lactic acid resin used in the present embodiment is preferably L isomer:D isomer=100:0 to 90:10 or L isomer:D isomer=0:100 to 10:90, more preferably L isomer:D isomer=99.5:0.5 to 94:6 or L isomer:D isomer=0.5:99.5 to 6:94. Within such limits, heat resistance is easily obtained, and an injection molded article that can be used in a wide range of applications can be obtained.

In addition, the lactic acid resin used in the present embodiment may be a copolymer of lactic acid and α-hydroxycarboxylic acid, aliphatic diol, or aliphatic dicarboxylic acid.

In so doing, examples of said "α-hydroxycarboxylic acids" that are copolymerized in the lactic acid resin include optical isomers of lactic acid (D-lactic acid with respect to L-lactic acid, and L-lactic acid with respect to D-lactic acid), glycolic acid, bifunctional aliphatic hydroxycarboxylic acids, such as 3-hydroxybutyric acid, 4-hydroxybutyric acid, 2-hydroxy-n-butyric acid, 2-hydroxy-3,3-dimethyl butyric acid, 2-hydroxy-3-methyl butyric acid, 2-methyl lactic acid, and 2-hydroxycaproic acid, lactones, such as caprolactone, butyrolactone, and valerolactone, and examples of said "aliphatic diol" that are copolymerized in the lactic acid resin include ethylene glycol, 1,4-butanediol, 1,4-cyclohexane dimethanol, and the like, and examples of said "aliphatic dicarboxylic acids" include succinic acid, adipic acid, suberic acid, sebacic acid, dodecane diacid, and the like.

Condensation polymerization, ring-opening polymerization, and other well-known polymerization methods can be adopted as the method for polymerizing lactic acid resin. For instance, in condensation polymerization, a lactic acid resin having any composition can be obtained by directly dehydrating, condensing, and polymerizing L-lactic acid or D-lactic acid or a mixture thereof.

In addition, in ring-opening polymerization, polylactic acid polymers can be obtained from lactide, which is a cyclic dimer of lactic acid, using a chosen catalyst, while using a polymerization regulator and the like as necessary. In so doing, L-lactide, which is a dimer of L-lactic acid, D-lactide, which is a dimer of D-lactic acid, or DL-lactide, which comprises L-lactic acid and D-lactic acid can be used as lactide, and a lactic acid resin with desired composition and crystallinity can be obtained by mixing and polymerizing these as necessary.

A non-aliphatic dicarboxylic acid, such as terephthalic acid, and a non-aliphatic diol, such as bisphenol A-ethylene oxide adduct, may be added as minor copolymerization components to the lactic acid resin used in the present embodiment, as necessary, such as to further increase the heat resistance or the like, within a range where the intrinsic characteristics of the lactic acid resin is not lost, that is, within a range where not less than 90 wt% of lactic acid resin component is contained.

Further, a small amount of chain extender, for instance, diisocyanate compound, epoxy compound, acid anhydride, and the like, may be added with the purpose of increasing the molecular weight.

The preferred range for the average molecular weight of the lactic acid resin used in the present embodiment is between 50,000 and 400,000, and more preferably between 100,000 and 250,000. If the molecular weight is not less than 50,000, excellent practical properties can be expected, and if under 400,000, there is also no problem of molding processability due to too high a molten viscosity.

Representative examples of lactic acid resins include the LACEA series manufactured by Mitsui Chemicals, Inc.; the Nature Works series manufactured by Cargill Dow, and the like.

(Metal hydroxide (B))

In the present embodiment, the use of a metal hydroxide (hydrated metallic compound) whose surface has been treated with a silane coupling agent to increase flame-retardant properties is important.

A decrease in the number of components (that is to say, a suppression of decrease in mechanical properties) due to improvement of flame-retardant properties, as well as a suppression of decrease in molecular weight during mixing with the resin and during molding of the injection molded article, can be projected by treating the surface of the hydroxide with a silane coupling agent.

Examples of metal hydroxides include aluminum hydroxide, magnesium hydroxide, calcium aluminate hydrate, tin oxide hydrate, phlogopite, and the like. Among these, aluminum hydroxide is particularly preferred. As aluminum hydroxide gives rise to highly endothermic reactions at lower temperatures in addition to being excellent from the perspective of costs compared to other metal hydroxides, it is a flame retardant that is particularly appropriate for flame retardation of lactic acid resin.

Examples of silane coupling agent species include epoxy silane, vinyl silane, methacrylic silane, amino silane, isocyanate silane, and the like, the use of epoxy silane being particularly, preferred from the perspective of dispersibility and effectiveness of providing flame-retardant properties.

As other non-silane coupling agents, for instance, titanate coupling agent, higher fatty acids, and the like, have bad adherence to the resin, exhibiting flame-retardant properties is difficult.

In addition, the average particle size of the metal hydroxide is preferably within a range of 0.1 $\mu$m to 5 $\mu$m, and more preferably within a range of 0.5$\mu$m to 3 $\mu$m. Flame retardation can be planned while maintaining the decrease in impact resistance at a minimum by combining a metal hydroxide whose average particle size falls within the range of 0.1 $\mu$m to 5 $\mu$m.

In addition, the flame-retardant efficiency can be further increased by combining a flame-retardant aid agent in addition to the above-mentioned hydrated metallic compounds. Concrete examples of flame-retardant aid agents include metallic compounds, such as zinc stannate, zinc borate, iron nitrate, copper nitrate, and metal sulfonate salts, phosphorus compounds, such as red phosphorus, high molecular weight phosphoesters, and phosphazen compounds, nitrogen compounds, such as melamine cyanurate, or silicone compounds, such as dimethyl silicone, phenyl silicone, and fluorine silicone, and the like.

(Copolymer (C))

In the present embodiment, combining a copolymer (C) of lactic acid resin and diol/dicarboxylic acid to increase impact resistance of the injection molded article is important. Impact resistance can be provided without losing flame-retardant properties by combining a copolymer (C) of lactic acid resin and diol/dicarboxylic acid.

For the proportion occupied by the lactic acid resin in the total of the copolymer (C), a lower limit of 10% in mass, in particular, 20% in mass, is more preferred from the perspective of heat resistance, and an upper limit of 80% in mass, in particular, 70% in mass, is more preferred from the perspective of effectiveness of provision of impact resistance.

Examples of copolymer structures include random copolymer, block copolymer, and graft copolymer, either structure being suitable. However, block copolymer and graft copolymer are preferred, in particular, from the perspective of effectiveness of improvement of impact resistance and transparency. Specific examples of random copolymers include the GS-Pla series manufactured by Mitsubishi Chemical Corporation, and specific examples of block copolymers or graft copolymers include the Plamate series manufactured by Dai Nippon Ink and Chemicals Incorporated.

There is no particular limitation on the manufacturing method thereof, and examples include methods wherein a polyester having a structure resulting from dehydration and condensation of diol and dicarboxylic acid, or a polyether polyol, is subjected to ring-opening polymerization or interesterification reaction with lactide, and methods wherein a polyester having a structure resulting from dehydration and condensation of diol and dicarboxylic acid, or a polyether polyol, is subjected to dehydration/deglycolation condensation or interesterification reaction with lactic acid resin.

There is no particular limitation on the above-mentioned diol component, and examples include linear diols, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol, branched diols, such as propylene glycol, 1,2-butanediol, 1,3-butanediol, 1,2-pentanediol, 1,3-pentanediol, 1,4-pentanediol, 2,3-pentanediol, 2,4-pentanediol, 1,2-hexanediol, 1,3-hexanediol, 1,4-hexanediol, and 1,5-hexanediol, and polyols, such as polyethyleneglycol, polypropyleneglycol, polybutyleneglycol, polytetramethyleneglycol.

There is no particular limitation on the above-mentioned dicarboxylic acid component, and examples include linear dicarboxylic acids, such as succinic acid, adipic acid, suberic acid,.azelaic acid, sebacic acid, nonane dicarboxylic acid, decane dicarboxylic acid, maleic acid, fumaric acid, citraconic acid, dodecane dicarboxylic acid, and cyclohexane dicarboxylic acid, branched dicarboxylic acids, such as methyl succinic acid, dimethyl succinic acid, ethyl succinic acid, 2-methyl glutaric acid, 2-ethyl glutaric acid, 3-methyl glutaric acid, 3-ethyl glutaric acid, 2-methyl adipic acid, 2-ethyl adipic acid, 3-methyl adipic acid, 3-ethyl adipic acid, and methyl glutaric acid, and aromatic dicarboxylic acids, such as phthalic acid, isophthalic acid, terephthalic acid, hexahydrophthalic acid, naphthalene dicarboxylic acid, phthalic anhydride, bisphenol A, and biphenol.

In addition, the above-mentioned copolymer (C) can be adjusted to a prescribed molecular weight using isocyanate compound or carboxylic acid anhydride. However, from the perspective of processability and durability, an average molecular weight for the copolymer of lactic acid resin and diol/dicarboxylic acid in the range of 50,000 to 300,000 is preferred, and a range of 100,000 to 250,000 is more preferred.

(Mixing proportions of components (B) and (C))

In regard to the mixing quantities of the above-mentioned components, the proportion occupied by metal hydroxide (B) in the total of lactic acid resin (A), metal hydroxide (B) whose surface was treated by silane coupling, and copolymer (C) is preferably between 10% and 40% in mass, and more preferably between 15% and 35% in mass. If this is below 10% in mass, the effectiveness of the improvement of impact resistance is poor. On the other hand, if this is above 40% in mass, softening of the molded article may occur, losing heat resistance.

Meanwhile, the proportion occupied by copolymer (C) in the total of lactic acid resin (A), metal hydroxide (B) whose surface was treated by silane coupling, and copolymer (C) is preferably between 15% and 40% in mass, and more preferably between 20% and 30% in mass. If this is below 15% in mass, sufficient flame-retardant properties cannot be conferred. On the other hand, if this is above 40% in mass, a notable decrease in mechanical strength may occur.

(Other mixing components)

A carbodiimide compound may be combined in addition to the above mentioned component (A), component (B), and component (C) in order to confer hydrolysis resistance to the injection molded article of the present embodiment. As for the mixing quantity of carbodiimide compound, mixing of 0.1 to 10 mass parts, in particular, 1 to 5 mass parts of carbodiimide compound with respect to 100 mass parts of the resin composition forming the injection molded article of the present embodiment is preferred. If this is below 0.1 mass parts, there is a case hydrolysis resistance cannot be conferred. In addition, if this is above 10 mass parts, softening of the injection molded article may occur, losing heat resistance.

It is preferred to mix an aromatic carbodiimide compound as the carbodiimide compound to be added. Although the effectiveness of conferring hydrolysis resistance is sufficient with an aliphatic carbodiimide compound, a hydrolysis resistance can be conferred more effectively with an aromatic carbodiimide.

The carbodiimide compounds may be those having the basic structure given in the following general formula.

-(N=C=N-R-)n-

(In the above-mentioned formula, n represents an integer that is 1 or greater. R represents other organic bond units. The R portion of these carbodiimide compounds may be any of aliphitics, alicyclics, and aromatics.)

In general, n is suitably defined between 1 and 50.

Specifically, examples include, for instance, bis(dipropylphenyl)carbodiimide, poly(4,4'-diphenylmethane carbodiimide), poly(p-phenylene carbodiimide), poly(m-phenylene carbodiimide), poly(tolyl carbodiimide), poly(diisopropylphenylene carbodiimide), poly(methyl-diisopropylphenylene carbodiimide), poly(triisopropylphenylene carbodiimide), and the like, and monomers thereof. For the carbodiimide compound, any thereof can be used either alone or by combining two or more species.

In addition, additives, such as heat stabilizer, antioxidant, UV absorbent, light stabilizer, pigment, and dye, can be prescribed within a range where the effect of the present embodiment is not lost.

(Manufacturing method)

Next, a method for molding the injection molded article of the present embodiment will be described.

The lactic acid resin, the metal hydroxide whose surface has been treated with a silane coupling agent, the copolymer of lactic acid resin and diol/dicarboxylic acid, other additives, and the like can be mixed by introducing the respective source materials into the same injection-molding machine. A method whereby the source materials are directly mixed using an injection-molding machine to perform injection molding, or a method wherein dry blended source materials are extruded into a strand shape using a biaxial extrusion machine to fabricate pellets, then the injection-molding machine is reused to fabricate an injection molded article, is available.

In either method, it is necessary to consider the decrease in molecular weight due to degradation of the source materials. However, it is preferable to select the latter in order to mix homogeneously. In the present embodiment, for instance, lactic acid resin, metal hydroxide whose surface has been treated with a silane coupling agent, copolymer of lactic acid resin and diol/dicarboxylic acid, and other additives are thoroughly dried to eliminate moisture, then melt-mixed using a biaxial extrusion machine and extruded into a strand shape to fabricate a pellet. It is preferred that the melt extrusion temperature be suitably selected, taking into consideration that the melting point of the lactic acid resin varies according to the composition ratio of the L-lactic acid structure and the D-lactic acid structure, the melting point of the mixed resin varies according to the mixing proportion of the copolymer of lactic acid resin and diol/dicarboxylic acid and the lactic acid resin, and the like. In general, an actual temperature range of 160°C to 230°C is selected.

After thoroughly drying the pellet fabricated by the above-mentioned method to eliminate moisture, injection molding is carried out according to the following method.

There is no particular limitation on the injection molded article of the present embodiment, which can be obtained by injection molding methods, such as, representatively, general injection molding method for thermoplastic resin, gas assist molding method, and injection compression molding method.

In addition to the methods mentioned above, In-Mold method, gas press molding method, two-color molding method, sandwich molding method, PUSH-PULL, SCORIM, and the like can also be adopted according to other purposes.

The injection molding device is constructed from a general injection-molding machine, a gas assist molding machine, an injection compression molding machine, and the like, and a molding die and auxiliary instruments, a mold temperature regulator and a source materials drier, and the like that are used therefor. For molding conditions, it is preferred to carry out molding with a molten resin temperature in the range of 170°C to 210°C to avoid thermal decomposition of the resin inside the injection cylinder.

If the injection molded article is to be obtained in a non-crystalline state, it is preferred that the mold temperature be as low a temperature as possible from the perspective of shortening the cooling time in the molding cycle (mold closing, injection, packing-holding, cooling, mold opening, and release). In general, 15°C to 55°C is desirable, as well as the use of a chiller. However, a high temperature within this range is advantageous from the perspective of preventing contraction, warp, and deformation of the molded article.

In addition, it is effective to carry out crystallization in the mold at molding time, or after release from the mold, to confer additional heat resistance to the molded article that is obtained by injection molding.

From the perspective of productivity, in case the crystallization speed of the resin that forms the injection molded article is slow, it is preferred to carry out crystallization after release from the mold, and if the crystallization speed is rapid, it is preferred to carry out crystallization inside the mold.

If crystallization is to be carried out inside the mold, the interior of a heated mold is filled with molten resin, which is then held inside the mold for a given time period. The mold temperature is from 80°C to 130°C, and preferably from 90°C to 120°C; the cooling time is from 1 to 300 seconds, and preferably from 5 to 30 seconds. The heat resistance of the injection molded article according to the present embodiment can be further increased by carrying out crystallization inside the mold with such temperature and cooling time.

In addition, if crystallization is to be carried out after releasing the molded article from the mold, the heating

6

temperature is preferably in the range of 60°C to 130°C, and more preferably in the range of 70°C to 90°C. In case the heating temperature is lower than 60°C, crystallization does not proceed in the molding process; in case it is greater than 130°C, deformation and contraction occur during cooling of the molded article. The heating time can be suitably determined according to the composition and heating temperature; for instance, at 70°C, heating is carried out for 15 minutes to 5 hours. In addition, at 130°C, heating is carried out for 10 seconds to 30 minutes.

Examples of crystallization methods include methods wherein injection molding is carried out in a mold whose temperature was raised previously, and crystallization is carried out inside the mold; methods wherein the temperature of the mold is raised after injection molding to carry out crystallization inside the mold; or methods wherein, after releasing the injection molded article in a non-crystalline state, crystallization is carried out with hot air, vapor, hot water, a far-infrared radiation heater, an 1H heater, and the like. In so doing, the injection molded article need not be immobilized; however, to prevent deformation of the molded article, it is preferred to immobilize the article with a metal mold, a resin mold, and the like. In addition, taking productivity into consideration, heating can also be carried out in a packaged state.

A crystallization promoting agent can be combined to shorten the crystallization time. Concrete examples of the crystallization promoting agents include inorganic crystallization promoting agents, such as talc, kaolin, calcium carbonate, bentnite, mica, sericite, glass flake, graphite, magnesium hydroxide, aluminum hydroxide, antimony trioxide, barium sulfate, zinc borate, hydrous calcium borate, alumina, magnesia, wollastonite, xonotlite, sepiolite, whisker, glass fiber; glass flake, metallic powder, beads, silica balloon, and shirasu balloon, or organic crystallization accelerating agents, such as sorbitol derivatives, olefin waxes, benzoate, and glycerin. In addition, inorganic crystallization promoting agents and organic crystallization promoting agents can also be used in combination.

As for the mixing quantity of the crystallization promoting agent, mixing 0.1 to 5 mass parts with respect to 100 mass parts of the resin composition forming the injection molded article according to the present embodiment is preferred, and mixing 0.5 to 3 mass parts is even more preferred. The effect of accelerating the crystallization speed can be conferred without losing impact resistance by mixing a crystallization promoting agent within such a range. In this way, a rapid crystallization inside the mold becomes possible, and an injection molded article having excellent heat resistance can be molded without elongating the molding cycle. In addition, the heat application time can be greatly shortened also when crystallization is to be carried out outside of the mold.

(Properties of the flame retardant injection molded article)

The injection molded articles according to the invention not only have excellent flame-retardant properties, but also combine excellent impact resistance and heat resistance. That is to say, these injection molded articles have the properties of not less than 5 kJ/m$^2$, preferably not less than 10 kJ/m$^2$ Izod impact strength according to JIS K 7110 (ASTM D256), not less than 50°C, preferably not less than 55°C deflection temperature under load according to JIS K 7191 (ASTM D648), and not less than V-2 flame retardant rating according to UL94 vertical firing test.

As the flame retardant injection molded articles not only have excellent flame-retardant properties, but also combine excellent impact resistance and heat resistance, they can be used as construction materials, home appliance products, office equipment, automotive parts, and other general molded articles, and, in particular, they can also be used in applications requiring heat resistance.

EXAMPLES

Examples will be given in the following; however, the scope of the present invention is not limited to these examples. First, the methods for evaluating the examples will be described.

(1) Flame-retardant property

A combustion test was carried out based on the procedure for vertical firing test of the UL94 safety standard by Underwriters Laboratories, with n=5, using specimens of 135 mm length × 13 mm width × 3 mm thickness.

The total time over 5 specimens of the time (t1+t2) that each specimen,remains in the flame during the first and second flaming was defined as T, and those with T less than 250 seconds were deemed compliant with the V-2 specification.

(2) Impact resistance

Based on JIS K 7110, 2A test fragment (with notch, 64 mm length × 12.7 mm width × 4 mm thickness) was created, and Izod impact strength measurement was carried out at 23°C using JISL-D manufactured by Toyo Seiki Seisaku-sho, Ltd.

The impact resistance of a commercialized ABS resin was used as the criteria for the assessment of Izod impact strength, and 5 kJ/m$^2$ and above was deemed compliant.

(3) Heat resistance

Based on JIS K 7191, a specimen with 120 mm length × 11 mm width × 3 mm thickness was created, and measurement of deflection temperature under load (HDT) was carried out using S-3M manufactured by Toyoseiki. The measurement was performed under the conditions of edgewise direction and 1.80 MPa flexure stress applied on the specimen.

No occurrence of deformation during the summer was used as the criteria for the assessment of the deflection temperature under load, and 50°C and above was deemed compliant.

(4) Durability

A wet heat test was carried out under the conditions of 85°C and 80% RH, and molecular weight retention after 100 hours of the wet heat test was calculated according to the following equation:

$$\text{molecular weight retention (\%)} = (\text{average molecular weight after wet heat test/average molecular weight before wet heat test}) \times 100$$

Regarding molecular weight retention, the practical criteria was 70% and above. The reason for this is the rapid progression of strength deterioration below about 70%.

The measurement of the average molecular weight was carried out according to the following method.

The measurement was performed using GPC (; Gel Permeation Chromatography, HLC-8120 manufactured by Tosoh Corporation), with solvent: chloroform; solvent concentration: 0.2 wt/vol%; volume of solution injected: 200 ul; solvent flow rate: 1.0 ml/minute; solvent temperature: 40°C; and the average molecular weight of the resin composition having lactic acid resin as the main component was calculated in equivalents of polystyrene. The average molecular weights of the polystyrene standards used in so doing were 2,000,000, 670,000, 110,000, 35,000, 10,000, 4,000, and 600.

(Example 1)

Nature Works 4032D (L-lactic acid/D-lactic acid=98.6/1.4, average molecular weight: 200,000) manufactured by Cargill Dow was used as the lactic acid resin (A), BFO13ST (aluminum hydroxide treated with epoxy silane coupling agent, average particle size: 1 μm) manufactured by Nippon Light Metal Company, Ltd., was used as the epoxy metal hydroxide (B), and Plamate PD-150 (copolymer of polylactic acid and propylene glycol/sebacic acid; polylactic acid: 50 mol%; propylene glycol: 25 mol%; sebacic acid: 25 mol%) manufactured by Dai Nippon Ink and Chemicals Incorporated was used as the copolymer (C) of lactic acid resin and diol/dicarboxylic acid.

After Nature Works 4032D, BFO13ST, and Plamate PD-150 were dry blended at proportions of 65:25:10 mass ratio, they were compounded at 180°C using a small-scale 40 mmnΦ codirectional biaxial extrusion machine manufactured by Mitsubishi Heavy Industries Co. and turned into a pellet shape. A 200 mm length × 3 mm width × 3 mm or 4 mm thickness plate was injection molded from the obtained pellet using the injection-molding machine IS50E (screw diameter: 25 mm) manufactured by Toshiba Machine Co., Ltd.

The main molding conditions were as follows:

1) Temperature conditions: cylinder temperature (195°C), mold temperature (20°C)
2) Injection conditions: injection pressure (115 Pa), hold pressure (55 MPa)
3) Measurement conditions: screw rotation speed (65 rpm), back pressure (15 MPa)

Next, the injection molded article was let to stand inside a baking test apparatus (DKS-5S manufactured by Daiei Kagaku Seiki Mfg Co., Ltd.) and heated for 2 hours at 70°C. Thereafter, evaluation of the above mentioned combustibility, impact resistance, and heat resistance was carried out using the plate that was obtained by injection molding. The results are shown in Table 1.

(Example 2)

After Nature Works 4032D, BFO13ST, and Plamate PD-150 were dry blended in proportions of 55:25:20 mass ratio, fabrication and evaluation of the injection molded article were carried out by the same methods as in Example 1. The results are shown in Table 1.

(Example 3)

After Nature Works 4032D, BFO13ST, and Plamate PD-150 were dry blended in proportions of 45:25:30 mass ratio, fabrication and evaluation of the injection molded article were carried out by the same methods as in Example 1. The results are shown in Table 1.

(Example 4)

After Nature Works 4032D, BFO13ST, and Plamate PD-150 were dry blended in proportions of 65:15:20 mass ratio, fabrication and evaluation of the injection molded article were carried out by the same methods as in Example 1. The results are shown in Table 1.

(Example 5)

After Nature Works 4032D, BFO13ST, and Plamate PD-150 were dry blended in proportions of 45:35:20 mass ratio, fabrication and evaluation of the injection molded article were carried out by the same methods as in Example 1. The results are shown in Table 1.

[Table 1]

|  |  | Example 1 | Example 2 | Example 3 | Example 4 | Example 5 |
|---|---|---|---|---|---|---|
| (A) | Nature Works 4032D | 65 | 55 | 45 | 65 | 45 |
| (B) | BF-013ST | 25 | 25 | 25 | 15 | 35 |
| (C) | Plamate PD-150 | 10 | 20 | 30 | 20 | 20 |
| flame-retardant properties (UL94V) | | V-2 | V-2 | V-2 | V-2 | V-2 |
| impact resistance (Izod strength: kJ/m$^2$) | | 8 | 11 | 23 | 16 | 7 |
| heat resistance (deflection temperature under load: °C) | | 57 | 55 | 53 | 55 | 56 |

(Comparative Example 1)

After Nature Works 4032D, BFO13ST, and Plamate PD-150 were dry blended in proportions of 70:10:20 mass ratio, fabrication and evaluation of the injection molded article were carried out by the same methods as in Example 1. The results are shown in Table 2.

(Comparative Example 2)

After Nature Works 4032D and BFO13ST were dry blended in proportions of 75:25 mass ratio, fabrication and evaluation of the injection molded article were carried out by the same methods as in Example 1. The results are shown in Table 2.

(Comparative Example 3)

After Nature Works 4032D, BFO13ST, and Plamate PD-150 were dry blended in proportions of 70:25:5 mass ratio, fabrication and evaluation of the injection molded article were carried out by the same methods as in Example 1. The results are shown in Table 2.

(Comparative Example 4)

After Nature Works 4032D, BFO13ST, and Plamate PD-150 were dry blended in proportions of 25:25:50 mass ratio, fabrication and evaluation of the injection molded article were carried out by the same methods as in Example 1. The results are shown in Table 2.

(Comparative Example 5)

Stearic acid treated BF-013S (aluminum hydroxide, average particle size: 1 μm) manufactured by Nippon Light Metal Company, Ltd., was mixed as the metal hydroxide. After Nature Works 4032D, stearic acid treated BF-013S, and Plamate PD-150 were dry blended in proportions of 55:25:20 mass ratio, fabrication and evaluation of the injection molded article were carried out by the same methods as in Example 1. The results are shown in Table 2.

(Comparative Example 6)

Bionolle 3003 (poly(butylene succinate/adipate), molecular weight: 200,000) manufactured by Showa Highpolymer Co., Ltd., was mixed alternatively to copolymer of lactic acid resin and diol/dicarboxylic acid. After Nature Works 4032D, BFO13ST, and Bionolle 3003 were dry blended in proportions of 55:25:20 mass ratio, fabrication and evaluation of the injection molded article were carried out by the same methods as in Example 1. The results are shown in Table 2.

[Table 2]

|  |  | Comparative Examples | Ex. 1 | Ex.2 | Ex.3 | Ex. 4 | Ex. 5 | Ex. 6 |
|---|---|---|---|---|---|---|---|---|
| (A) | | Nature Works 4032D | 70 | 75 | 70 | 25 | 55 | 55 |
| (B) | BF-013ST | | 10 | 25 | 25 | 25 |  | 25 |
|  | stearic acid treated BF-013S | |  |  |  |  | 25 |  |
| (C) | Plamate PD-150 | | 20 |  | 5 | 50 | 20 |  |
|  | Bionolle 3003 | |  |  |  |  |  | 20 |
| flame-retardant properties (UL94V) | | | out-of-spec | V-2 | V-2 | V-2 | out-of-spec | out-of-spec |
| impact resistance (Izod strength: kJ/m$^2$) | | | 20 | 1 | 3 | 35 | 7 | 3 |
| heat resistance (deflection temperature under load: °C) | | | 56 | 63 | 60 | 46 | 55 | 55 |

(Example 6)

Stabaxol I (bis(dipropyl phenyl)carbodiimide) manufactured by Rhein Chemie was mixed as the carbodiimide compound. After Nature Works 4032D, BFO13ST, Plamate PD-150, and Stabaxol I were dry blended in proportions of 55:25:20:2 mass ratio, fabrication and evaluation of the injection molded article were carried out by the same methods as in Example 1. The results are shown in Table 3.

(Example 7)

Stabaxol P (poly carbodiimide) manufactured by Rhein Chemie was mixed as the carbodiimide compound. After Nature Works 4032D, BFO13ST, Plamate PD-150, and Stabaxol P were dry blended in proportions of 55:25:20: 5 mass ratio, fabrication and evaluation of the injection molded article were carried out by the same methods as in Example 1. The results are shown in Table 3.

[Table 3]

|  |  | Example 2 | Example 6 | Example 7 |
|---|---|---|---|---|
| (A) | Nature Works 4032D | 55 | 55 | 55 |
| (B) | BF-013ST | 25 | 25 | 25 |
| (C) | Plamate PD-150 | 20 | 20 | 20 |
|  | Stabaxol 1 |  | 2 |  |
|  | Stabaxol P |  |  | 5 |
|  | durability (molecular weight retention: %) | 5 | 95 | 94 |

As is apparent from Table 1, the injection molded articles of Examples 1 to 5 were revealed to be excellent in all aspects of flame-retardant properties, impact resistance, and heat resistance, having flame-retardant properties of V-2 based on UL94, not less than 5 kJ/m$^2$ Izod impact strength, and not less than 50°C deflection temperature under load.

On the other hand, as is apparent from Table 2, the injection molded articles of Comparative Examples 1 and 5 had excellent impact resistance and heat resistance; however, their flame-retardant properties being outside the specification, the flame-retardant properties thereof were poor. The injection molded articles of Comparative Examples 2 and 3 had excellent flame-retardant properties and heat resistance; however, their Izod impact strength being less than 5 kJ/m$^2$, the impact resistance thereof was poor. The injection molded article of Comparative Example 4 had excellent flame-retardant properties and impact resistance; however, the deflection temperature under load being 50°C, the heat resistance thereof was poor. The injection molded article of Comparative Example 6 had excellent heat resistance; however, the flame-retardant properties being outside the specification and the Izod impact strength being less than 5 kJ/m$^2$, the flame-retardant properties and impact resistance thereof were poor. As shown in the foregoing, the injection molded articles of Comparative Examples 1 to 6 were not practicable in one or more among flame-retardant properties, impact resistance, and heat resistance.

In addition, as is apparent from Table 3, it was revealed that durability could be conferred by mixing a carbodiimide compound in the resin composition that is to form the injection molded article of the present invention.

**Claims**

1. A flame retardant injection molded article that is a flame retardant injection molded article formed from a resin composition comprising a lactic acid resin (A) and a metal hydroxide (B) whose surface has been treated with a silane coupling agent, and a copolymer (C) of lactic acid resin and diol/dicarboxylic acid;
   the proportion in said resin composition occupied by the component (B) being 15% to 40% in mass, and
   the proportion in the resin composition occupied by the component (C) being 10% to 40% in mass;
   the Izod impact strength being not less than 5 kJ/m$^2$ according to JIS K 7110, and the deflection temperature under load being not less than 50°C according to JIS K 7191, and the flame retardant rating being V-2 and above according to UL94 vertical firing test,
   wherein the lactic acid resin (A) is selected from the group consisting of poly(L-lactic acid), poly(D-lactic acid), poly(DL-lactic acid), a copolymer of lactic acid and an α-hydroxycarboxylic acid, a copolymer of lactic acid and an aliphatic diol, and a copolymer of lactic acid and an aliphatic dicarboxylic acid.

2. The flame retardant injection molded article as recited in Claim 1,

wherein the metal hydroxide of component (B) is aluminum hydroxide.

3. The flame retardant injection molded article as recited in Claim 1 or 2,
   wherein the average particle size of the metal hydroxide of component (B) is between 0.1 $\mu$m and 5 $\mu$m.

4. The flame retardant injection molded article as recited in any one of Claims 1 to 3,
   wherein the silane coupling agent of component (B) is an epoxy silane coupling agent.

5. Method for obtaining the flame retardant injection molded article as recited in any one of Claims 1 to 4, by methods wherein the temperature of the mold is raised after injection molding to accelerate crystallization inside the mold, or methods wherein after releasing the injection molded article, crystallization is accelerated with heat treatment.

**Patentansprüche**

1. Schwerentflammbares Spritzgießformteil, welches ein schwerentflammbares Spritzgießformteil ist, welches gebildet ist aus einer Harz-Zusammensetzung enthaltend ein Milchsäureharz (A) und ein Metallhydroxid (B), dessen Oberfläche mit einem Silankupplungsmittel behandelt worden ist, und ein Copolymer (C) von Milchsäureharz und Diol/Dicarbonsäure:

   worin der Anteil der Komponente (B) in der Harz-Zusammensetzung 15 bis 40 Massen-% ist, und
   der Anteil der Komponente (C) in der Harz-Zusammensetzung 10 bis 40 Massen-% ist;
   und worin die Izod-Kerbschlagzähigkeit nicht weniger als 5 kJ/m$^2$ gemäß JIS K 7110 ist und die Wärmeformbeständigkeit unter Belastung nicht weniger als 50°C gemäß JIS K 7191 ist und die Flammschutzklasse V-2 und höher gemäß UL94 vertikalem Flammentest ist,
   worin das Milchsäureharz (A) ausgewählt ist aus der Gruppe bestehend aus Poly(L-Milchsäure), Poly(D-Milchsäure), Poly(DL-Milchsäure), einem Copolymer von Milchsäure und einer $\alpha$-Hydroycarbonsäure, einem Copolymer von Milchsäure und einem aliphatischen Diol und einem Copolymer von Milchsäure und einer aliphatischen dicarbonsäure.

2. Schwerentflammbares Spritzgleßformtell gemäß Anspruch 1, worin das Metallhydroxid Verbindung (B) Aluminiumhydroxid ist.

3. Schwerentflammbares Spritzgießformteil gemäß Anspruch 1 oder 2, worin die mittlere Partikelgröße des Metallhydroxids der Komponente (B) zwischen 0,1 $\mu$m und 5 $\mu$m liegt.

4. Schwerentflammbares Spritzgießformteil gemäß einem der Ansprüche 1 bis 3, worin das Silankupplungsmittel der Komponente (B) ein Epoxysilankupplungsmittel ist.

5. Verfahren zur Herstellung eines schwerentflammbaren Spritzgleßformteils gemäß einem der Ansprüche 1 bis 4 durch Verfahren, worin die Temperatur der Form nach dem Spritzgießen erhöht wird, um die Kristallisation innerhalb der Form zu beschleunigen oder Verfahren, worin nach dem Entnehmen des Spritzgleßformtells die Kristallisation durch eine Hitzebehandlung beschleunigt wird.

**Revendications**

1. Articule moulé par injection ignifuge qui est un article moulé par injection ignifuge formé d'une composition de résine comprenant une résine d'acide lactique (A) et un hydroxyde métallique (B) dont la surface a été traitée avec un agent de couplage silane, et un copolymère (C) de résine d'acide lactique et de diol/acide dicarboxylique;
   la partie de la composition de résine occupée par le composant (B) étant de 15 % à 40 % en masse, et
   la partie de la composition de résine occupée par le composant (C) étant de 10 à 40 % en masse;
   la résistance au choc Izod n'étant pas inférieure à 5 kJ/m$^2$ selon JIS K 7110, et la température de fléchissement sous charge n'étant pas inférieure à 50 °C selon JIS K 7191 et le taux ignifuge étant V-2 et supérieure selon UL 94 test de combustion verticale.
   dans lequel la résine d'acide lactique (A) est sélectionnée parmi le groupe consistant en l'acide poly(L-lactique), l'acide poly(D-lactIque), l'acide poly(D,L-lactique), un copolymère de l'acide lactique et l'acide $\alpha$-hydroxycarboxylique, un copolymère de l'acide lactique et un diol aliphatique et un copolymère de l'acide lactique et un acide dicarboxylique aliphatique.

2. Articule moulé par injection ignifuge selon la revendication 1, dans lequel l'hydroxyde métallique du composant (B) est l'hydroxyde d'aluminium.

3. Article par injection ignifuge selon la revendication 1 ou 2, dans lequel la taille moyenne des particules du hydroxyde métallique du composant (B) est entre 0,1 $\mu$m et 5 $\mu$m.

4. Article par injection ignifuge selon ne des revendications 1 à 3, dans lequel l'agent de couplage silane du composant (B) est un agent de couplage époxy silane.

5. Procédé pour obtenir un article moulé par injection ignifuge selon l'une des revendications 1 à 4 par des procédés dans lesquels la température du moule est augmentée après le moulage d'injection pour accélérer la cristallisation à l'intérieur du moule ou des procédés dans lesquels la cristallisation est accélérée par un traitement thermique après le démoulage du article moulé par injection.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8252823 B
- JP 2003192925 A
- JP 2003192929 A
- JP 2003213149 A
- JP 2003192921 A

- JP H1087976 B
- JP H11116784 B
- EP 1609820 A1
- EP 1544250 A1
- JP 2002105298 A